# FASCICULE DE BREVET EUROPEEN

(11) **EP 0 372 450 B1**
(45) Date de publication et mention de la délivrance du brevet: **12.01.1994**
(21) Numéro de dépôt: 89122315.8
(22) Date de dépôt: 04.12.1989
(51) Int. Cl.: C03B 37/012, C03B 37/027

(54) **Procédé d'élaboration d'une préforme pour fibre optique à maintien de polarisation**
Verfahren zum Verarbeiten einer Vorform für polarisationserhaltende optische Fasern
Process for working up a preform for a polarization-maintaining optical fibre

(30) Priorité: 09.12.1988 FR 8816224
(43) Date de publication de la demande: 13.06.1990
(73) Titulaire: ALCATEL N.V., NL-1077 XX Amsterdam (NL)
(72) Inventeur: Brehm, Claude, F-92120 Montrouge (FR); Dupont, Philippe, F-77000 Melun (FR); Ramos, Josiane, F-91070 Bondoufle (FR)
(74) Mandataire: Weinmiller, Jürgen

(56) Documents cités:
- EP-A- 0 145 031
- EP-A- 0 147 225
- PATENT ABSTRACTS OF JAPAN, vol. 7, no. 56 (C-155)[1201], 8 mars 1983; & JP-A-57 205 333 (NIPPON DENSHIN DENWA KOSHA) 16-12-1982
- PATENT ABSTRACTS OF JAPAN, vol. 11, no. 365 (C-460)[2812], 27 novembre 1987; & JP-A-62 138 337 (FUJITSU LTD) 22-06-1987

## Description

La présente invention concerne un procédé d'élaboration d'une préforme pour fibre optique à maintien de polarisation.

Chaque fois que le maintien, stable dans le temps, d'un état de polarisation de la lumière est nécessaire, compte tenu des contraintes extérieures (variations de température, de pression...), la fibre optique monomode classique à faibles pertes pour télécommunications optiques doit être remplacée par une fibre spécifique réalisant ce maintien de polarisation. En effet, à cause des imperfections résiduelles (légère ellipticité, anisotropie de contrainte), les fibres monomode classiques, dites de symétrie de révolution, peuvent supporter en pratique deux modes de propagation polarisés orthogonaux, et, en raison des effets de couplage de mode, l'état de polarisation est instable en sortie.

Les fibres à maintien de polarisation linéaire présentent une biréfringence linéaire introduite en levant la dégénérescence des deux états de polarisation linéaire du mode fondamental, soit par une biréfringence de forme (coeur elliptique), soit par une biréfringence de contrainte (anisotroprie de contrainte autour du coeur), ou une combinaison des deux.
Ces fibres sont intéressantes pour les systèmes de télécommunications optiques à détection cohérente, liaisons grandes distances et réseaux, ainsi que pour certaines applications de capteurs à fibre optique, telles que l'hydrophone.

On connaît divers procédés de réalisation de fibres à maintien de polarisation linéaire qui sont décrits dans la référence (1) "Polarization-maintening fibers and their applications" - J. Noda et Al - J. Lightwave Technol. vol. LT-4, n° 8, pages 1071, 1089, 1986. Des fibres de type "noeud-papillon" sont élaborées par dépôt MCVD de gaine et de coeur dans un tube comportant des secteurs circulaires diamétralement opposés, et dopés au Bore.

Dans la référence (2) "Substrate tube lithography for optical fibers" - R.H. Stolen et al - Electron. Lett. Vol. 18, n° 18, pages 764-765, 1982, ces secteurs sont réalisés par attaque chimique sélective. Cette technique est délicate : elle consiste à attaquer par une solution d'acide fluorhydrique les secteurs de silice dopée à l'oxyde de bore qui n'ont pas été protégés par dépôt de résine photosensible. Les étapes sont nombreuses, dépôt, insolation UV, développement, attaque, etc...

Dans la référence (3) "Fabrication of polarization maintening fibers" - R.D. Birch et al - Electron. Lett. vol. 18, n° 24, pages 1046-1038, 1982, ces secteurs sont réalisés par attaque thermique sélective. L'attaque est effectuée dans ce cas par du gaz fluorhydrique sur les parties chauffées par le chalumeau.

Dans les deux cas précédents, le dépôt ultérieur de la gaine optique et du coeur est fait sur une structure dissymétrique, ce qui conduit après rétreint à un coeur non circulaire et augmente donc les pertes de couplage avec une fibre de ligne standard à coeur circulaire. Dans le deuxième cas il est possible de réduire cet effet par une phase supplémentaire de redépôt localisé, comme il est indiqué dans la demande de brevet britannique GB-A-2 180 232. Ceci complique encore le procédé et le résultat est encore très imparfait.

Dans la référence (4) "Polarization-maintening fiber - Y. Sasaki et al. - Electron" Lett. vol. 19, pages 792-794, 1983, on met en oeuvre la méthode "pin-in-jacket" ou "Panda", nécessitant un perçage de l'enveloppe qui est une opération difficile à réaliser sur une grande longueur sans risque de fracture de la préforme.

Dans tous les procédés qui viennent d'être mentionnés, on introduit de part et d'autre du coeur des zones en silice dopée à l'oxyde de bore. Pour induire une biréfringence élevée, il est nécessaire d'introduire dans la préforme des zones apportant un niveau de contraintes important, ce qui provoque très souvent des fissurations, ou même un éclatement des préformes.

On connaît par la demande de brevet européen EP-A-145 031 un procédé selon lequel on dispose autour d'une préforme de base, à l'intérieur d'une gaine de silice, d'une part deux cylindres en silice dopée au moins à l'oxyde de bore et d'autre part deux cylindres en silice dopée à l'oxyde de titane ; les espaces libres à l'intérieur de la gaine sont munis de tiges en silice non dopée. Il est extrêmement difficile de maintenir tous ces éléments en bonne position, les uns par rapport aux autres. On constate que les fibres résultant de ce procédé présentent des déformations au niveau du coeur, ce qui est gênant pour le couplage avec une fibre bien circulaire, ou des déformations extérieures, ce qui complique les manipulations ultérieures de cette fibre.

Un état de la technique similaire est divulgué dans JP-A-57 205333. Ici, on dispose autour d'une préforme de base deux barreaux de section circulaire en verre dopée à l'oxyde de bore et deux barreaux de section circulaire en verre dopée à l'oxyde de titane. Il semble difficile de centrer correctement la préforme dans cet ensemble au sein d'une gaine extérieure.

Enfin, le document JP-A-62 138337 décrit une préforme qui est entourée d'un tube constitué de secteurs en plusieurs types de verre.

La présente invention a pour but d'éviter les inconvénients précités et de réaliser de manière plus simple une fibre à maintien de polarisation à haute biréfringence, facile à coupler ou à connecter aux autres fibres du réseau.

Ce but est atteint selon l'invention par le procédé tel que défini dans la revendication principale. En ce qui concerne des exemples de mises en oeuvre préférées de l'invention, référence est faite aux revendications dépendantes.

L'oxyde de bore ayant un fort coefficient de dilatation et l'oxyde de titane ayant un faible coefficient de dilatation, les secteurs dopés à l'oxyde de bore introduisent une contrainte de compression suivant une direction perpendiculaire à l'axe de la fibre, tandis que les secteurs dopés à l'oxyde de titane et au fluor introduisent une contrainte d'extension suivant la direction perpendiculaire, ce qui permet d'induire une forte biréfringence linéaire.
Ces contraintes sont induites autour d'un coeur bien circulaire.

L'ajout de fluor à l'oxyde de titane en proportions molaires voisines permet de réduire, et même d'annuler, l'augmentation d'indice due à la présence de titane, ce qui évite des effets de guidage de lumière parasite.

D'autres caractéristiques et avantages de la présente invention apparaîtront au cours de la description suivante d'exemples de mise en oeuvre donnés à titre illustratif mais nullement limitatif. Dans le dessin annexé :
- La figure 1 est une vue schématique en coupe transversale d'une préforme de base classique cylindrique.
- La figure 2A montre schématiquement en coupe transversale un tube support en silice présentant des dépôts internes en silice dopée à l'oxyde de bore.
- La figure 2B est une coupe transversale d'une ébauche cylindrique obtenue à partir du tube de la figure 2A, après tronçonnage en quatre portions.
- Les figures 3A et 3B sont respectivement analogues aux figures 2A et 2B, mais pour un tube support en silice présentant des dépôts internes en silice dopée à l'oxyde de titane.
- La figure 4 montre, avant rétreint, un exemple de préforme selon l'invention obtenue à partir des éléments des figures 1, 2B et 3B.
- La figure 5 est une vue schématique en coupe transversale d'une variante de préforme de base, prismatique.
- La figure 6A est une vue en coupe transversale d'un tube analogue à celui qui est représenté dans la figure 2A, c'est-à-dire constitué d'un support de silice présentant des dépôts internes en silice dopée à l'oxyde de bore.
- La figure 6B est une vue en coupe transversale d'un élément oblong obtenu à partir du tube de la figure 6A.
- Les figures 7A et 7B sont respectivement analogues aux figures 6A et 6B, mais pour un tube support en silice présentant des dépôts internes en silice dopée à l'oxyde de titane.
- La figure 8 montre, avant retreint, un autre exemple de préforme selon l'invention obtenue à partir des éléments des figures 5, 6B et 7B.
- La figure 9 est une vue schématique en coupe transversale d'une variante de préforme de base cylindrique à quatre sillons longitudinaux.
- La figure 10A montre schématiquement en coupe transversale un tube support en silice présentant des dépôts internes en silice dopée à l'oxyde de bore.
- La figure 10B est une ébauche cylindrique obtenue à partir du tube de la figure 10A.
- La figure 11A montre schématiquement en coupe transversale un tube support en silice présentant des dépôts internes en silice dopée à l'oxyde de titane et au fluor.
- La figure 11b est une ébauche cylindrique obtenue à partir du tube de la figure 11A.
- La figure 12 montre, avant rétreint, en coupe transversale une préforme selon l'invention obtenue à partir des éléments des figures 9, 10B et 11B.

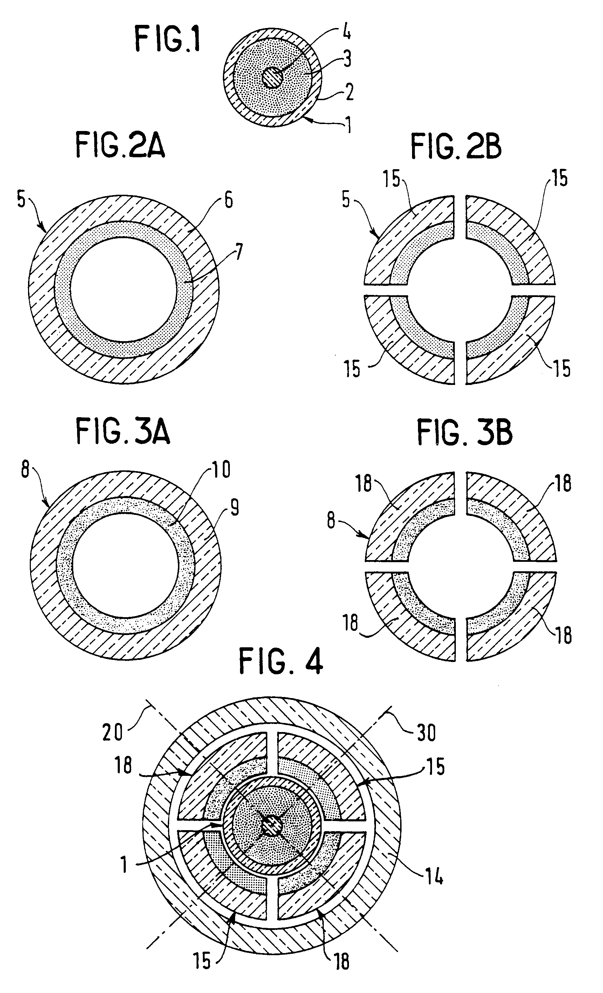

On voit dans la figure 1 une préforme 1 préparée par la technique de dépôt MCVD classique ; il s'agit d'une préforme monomode comportant dans un tube de silice 2 une gaine 3 en silice dopée à l'oxyde de phosphore et au fluor et un coeur 4 en silice dopée à l'oxyde de germanium. L'épaisseur du tube de silice 2 peut être réduite, par exemple par attaque chimique ou évaporation au chalumeau.

On prépare par ailleurs un tube 5 (figure 2A) constitué par un tube support en silice 6 muni, par la technique de dépôt MCVD, de dépôts 7 de silice dopée à l'oxyde de bore avec éventuellement un codopage à l'oxyde de germanium.
De même on prépare un tube 8 (figure 3A) constitué par un tube support en silice 9, muni par la technique de dépôt MCVD, de dépôts 10 d'oxyde de titane avec éventuellement un codopage au fluor. L'oxyde de bore présente un fort coefficient de dilatation, tandis que l'oxyde de titane possède un faible coefficient de dilatation.
Chaque tube est découpé à la scie diamantée suivant deux plans passant par son axe, de manière à former quatre éléments oblongs 15 (figure 2B) et quatre éléments oblongs 18 (figure 3B).
Si on se reporte à la figure 4, on retrouve la préforme de base 1 avec ses deux plans orthogonaux référencés 20 et 30.
Symétriquement par rapport au plan 20, on dispose contre la préforme 1 deux éléments 15, et symétriquement par rapport au plan 30, on dispose deux éléments 18. La section transversale des quatre éléments 15 et 18 définit un anneau. Tous ces éléments peuvent être fixés aisément sur la préforme 1, par exemple par des soudures aux extrémités. Un tube de silice extérieur 14 est de préférence ajouté autour de cet ensemble qui est ensuite retreint de préférence sous pression réduite, par exemple sous 100 torrs, et dans une gamme de températures comprise entre 2000°C et 2200°C.
On obtient alors une préforme que l'on peut fibrer comme une préforme classique. Les secteurs dopés à l'oxyde de bore introduisent une contrainte de compression suivant une direction perpendiculaire à l'axe de la fibre. Les secteurs dopés à l'oxyde de titane introduisent une contrainte d'extension suivant la direction perpendiculaire, ce qui permet d'induire une forte biréfringence linéaire.

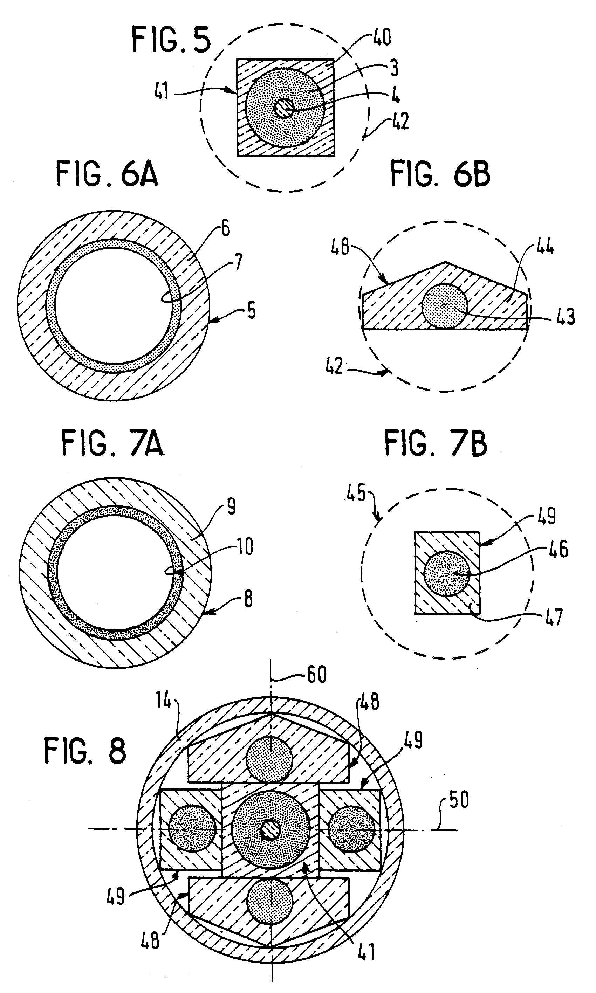

Dans une seconde variante, on peut opérer suivant les phases illustrées dans les figures 5 à 8. La préforme de base 41 est analogue à la préforme 1 précédente, mais son tube extérieur 42 a été usiné ou poli de manière à former un prisme 40 à section carrée par exemple.
Par retreint d'un tube 5 de la figure 6A, analogue à celui de la figure 2A, on obtient (figure 6B) un cylindre 42 dont on usine, ou on polit, la partie en silice pure de manière à réaliser un prisme 44 à section polygonale, contenant un cylindre central 43 en silice dopée à l'oxyde de bore ; on a référencé 48 cet élément oblong.
Par retreint d'un tube 8 de la figure 7A, analogue à celui de la figure 3A, on obtient (figure 7B) un cylindre 45 dont on usine, ou on polit, la partie en silice pure de manière à réaliser un prisme 47 à section carrée contenant un cylindre central 46 en silice dopée à l'oxyde de titane. On a référencé 49 cet élément oblong.

En se reportant à la figure 8, on retrouve la préforme de base 41 avec les traces 50 et 60 de deux plans de symétrie orthogonaux. De part et d'autre du plan 50 sont disposés deux éléments oblongs 48, et de part et d'autre du plan 60 sont disposés deux éléments oblongs 49.

Les profils d'usinage de ces différents éléments sont choisis de manière à réduire pratiquement totalement les espaces vides lorsqu'ils sont inclus dans un tube extérieur de silice 14. La section transversale des quatre éléments est partiellement annulaire. On réalise ensuite comme précédemment un retreint.

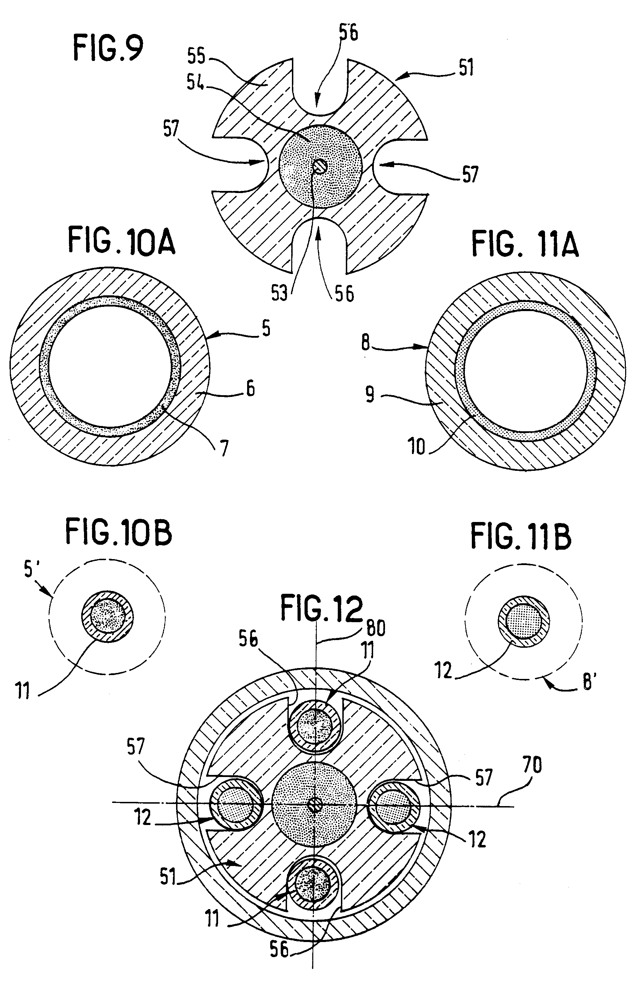

Dans une troisième variante, on opère suivant les phases illustrées dans les figures 9 à 12.

Dans la figure 9 une préforme 51 initialement cylindrique comporte, dans un tube de silice 55, une gaine 54 en silice dopée à l'oxyde de phosphore et au fluor et un coeur 53 en silice dopée à l'oxyde de germanium. Cette préforme est préparée par la technique de dépôt MCVD classique.

On réalise sur la face latérale de cette préforme quatre sillons longitudinaux 56 et 57 régulièrement répartis. Ces sillons sont creusés aisément sur toute la longueur de la préforme, par exemple à la fraise diamantée.

On réalise par ailleurs un tube 5 (figure 10A) analogue à celui de la figure 2A, avec des dépôts 7 de silice dopée à l'oxyde de bore avec éventuellement un codopage à l'oxyde de germanium.

De même on réalise un tube 8 (figure 11A) constitué par un tube support 9 muni, par la technique de dépôt MCVD, de dépôts 10 d'oxyde de titane et de fluor.

On rétreint les tubes 5 et 8 qui deviennent 5′ et 8′ (cf figures 10B et 11B) et on élimine au moins partiellement la silice des tubes supports par attaque chimique ou par évaporation au chalumeau. On obtient des ébauches 11 et 12. Leurs diamètres coïncident sensiblement avec les dimensions des sillons 56 et 57 prévus dans la préforme 51, comme cela apparaît dans la figure 12.
On a représenté dans cette figure les traces 70 et 80 de deux plans de symétrie orthogonaux présentés par la préforme 51. Symétriquement par rapport au plan 70, on dispose contre la face externe de la préforme dans les sillons 56 deux ébauches 11, et symétriquement par rapport au plan 80 dans les sillons 57 deux ébauches 12. Les ébauches sont maintenues facilement dans les sillons correspondants, et de préférence ne dépassent pas la face externe de la préforme 51.

L'ensemble sensiblement cylindrique ainsi formé est introduit dans un tube de silice extérieur 14, puis soumis au rétreint.

Dans toutes les variantes décrites ci-dessus, on obtient une fibre où est induite une forte biréfringence linéaire ; cette fibre a conservé une bonne circularité de coeur, ce qui facilite les couplages et les connexions, ainsi qu'une bonne circularité extérieure.

Bien entendu l'invention n'est pas limitée aux modes de réalisation qui ont été décrits.
Ainsi dans la fabrication des différents tubes, il est possible d'introduire les oxydes de bore, germanium, ou titane, par nébulisation d'une solution aqueuse ou organique de chlorure selon le procédé décrit dans le brevet français n° 87 14 286. Quant au fluor, il peut être introduit sous forme de gaz tel que SiF₄, C₂F₆, CF₂Cl₂, SF₆...etc.

## Revendications

1. Procédé d'élaboration d'une préforme pour fibre optique à maintien de polarisation selon lequel on part d'une préforme de base comportant un coeur circulaire (4) en silice dopée, une gaine en silice dopée (3) et un tube externe en silice (2), cette préforme de base présentant deux plans de symétrie orthogonaux passant par son axe et l'on applique mécaniquement sur la face externe de ladite préforme de base, symétriquement par rapport au premier plan et par rapport au second plan précités, respectivement deux éléments oblongs au moins partiellement en silice dopée au moins à l'oxyde de bore, et deux éléments oblongs au moins partiellement en silice dopée au moins à l'oxyde de titane, caractérisé par le fait que ladite face externe dudit tube externe de ladite préforme de base et lesdits quatre éléments oblongs sont conformés de manière à se compléter et à former à eux seuls un cylindre pratiquement plein, l'ensemble étant fixé à ses deux extrémités, et étant ensuite rétreint.

2. Procédé d'élaboration d'une préforme selon la revendication 1, caractérisé par le fait que ladite face externe dudit tube externe (2) de ladite préforme de base (1) est cylindrique et que chaque élément oblong (15, 18) est une portion de tube (5, 8) découpé suivant deux plans passant par son axe.

3. Procédé selon la revendication 2, caractérisé par le fait que ledit tube dudit élément oblong est un tube support (6, 9) muni intérieurement d'un dépôt en silice dopée à l'oxyde de bore (7), ou à l'oxyde de titane (10), et qu'il est découpé longitudinalement à la scie diamantée.

4. Procédé d'élaboration d'une préforme selon la revendication 1, caractérisé par le fait que ladite face externe dudit tube externe (40) de ladite préforme de base (41) est prismatique et que chaque élément oblong (48, 49) est obtenu par retreint d'un tube (5, 8) en silice pure dopée à l'oxyde de bore, ou à l'oxyde de titane, la partie de silice pure étant ensuite usinée, ou polie, latéralement de manière à former un prisme (48, 49) de section polygonale.

5. Procédé d'élaboration d'une préforme selon la revendication 4, caractérisé par le fait que ladite préforme de base (41) a une section transversale carrée.

6. Procédé d'élaboration d'une préforme selon la revendication 1, caractérisé par le fait que ladite face externe dudit tube externe de ladite préforme de base (51) initialement cylindrique est usinée de manière à former quatre sillons (56, 57) où viennent se loger respectivement lesdits éléments oblongs constitués d'ébauches cylindriques (11, 12).

7. Procédé d'élaboration d'une préforme selon la revendication 6, caractérisé par le fait qu'une ébauche (11, 12) en oxyde de bore, ou en oxyde de titane, est obtenue par rétreint d'un tube support (6, 9) comportant intérieurement des dépôts (7, 10) d'oxyde de bore ou d'oxyde de titane, puis élimination totale ou partielle dudit tube support.

8. Procédé selon l'une des revendications précédentes, caractérisé par le fait que l'ensemble formé par ladite préforme de base et lesdits quatre éléments oblongs est introduit pour manchonnage dans un tube externe (14) de silice.

9. Procédé selon l'une des revendications précédentes, caractérisé par le fait que la silice dopée à l'oxyde de bore comporte en outre de l'oxyde de germanium.

10. Procédé selon l'une des revendications précédentes, caractérisé par le fait que la silice dopée à l'oxyde de titane comporte en outre un dopage au fluor.

## Claims

1. A method of providing a preform for a polarization-maintaining optical fiber, starting from a basic preform including a circular center (4) made from doped silica, a sheath made from doped silica (3) and an external silica tube, said basic preform having two orthogonal plans of symmetry intersecting along its axis, and mechanically applying two oblong elements at least partially constituted by silica doped at least with boron oxide on the outside face of said basic preform symmetrically about the first plane, and two oblong elements at least partially constituted by silica doped at least with titanium oxide on the outside face of said basic preform and symmetrically about the second plane, the method being characterized by the fact that the said outside face of said external tube of said basic preform and the said four oblong elements are formed so as to complement one another and so that they form a cylinder between them which is almost complete, the assembly being fixed at both ends and then collapsed.

2. A method of making a preform according to claim 1, characterized by the fact that said outside face of said external tube (2) of said basic preform (1) is cylindrical and each oblong element (15, 18) is a portion of a tube (5, 8) cut along two planes intersecting along the tube axis.

3. A method according to claim 2, characterized by the fact that said tube of the said oblong element is a support tube (6, 8) provided on its inside with a deposit of silica doped with boron oxide (7) or with titanium oxide (10), with the tube being cut longitudinally by means of a diamond saw.

4. A method of making a preform according to claim 1, characterized by the fact that said outside face of said external tube (40) of said basic preform (41) is prismatic and each oblong element (48, 49) is obtained by collapsing a tube (5, 8) of pure silica doped with boron oxide or titanium oxide, with the pure silica portion subsequently being machined or polished laterally so as to form a prism (48 ,49) of polygonal section.

5. A method of making a preform according to claim 4, characterized by the fact that the cross-section of said basic preform (41) is square.

6. A method of making a preform according to claim 1, characterized by the fact that the said external face of said external tube of the said initially-cylindrical basic preform (51), is machined so as to form four grooves (56, 57) for receiving respective oblong elements which are constituted by cylindrical blanks (11, 12).

7. A method of making a preform according to claim 6, characterized by the fact that a boron oxide blank (11, 12) or a titanium oxide blank is obtained by collapsing a support tube (6, 9) containing internal deposits (7, 10) of boron oxide or of titanium oxide, and then totally or partially eliminating said support tube.

8. A method according to any preceding claim, characterized by the fact that the assembly constituted by said basic preform and said four oblong elements is inserted into an outer silica tube (14) prior to collapsing.

9. A method according to any preceding claim, characterized by the fact that the silica doped with boron oxide further includes germanium oxide.

10. A method according to any preceding claim, characterized by the fact that the silica doped with titanium oxide further includes fluorine doping.

## Patentansprüche

1. Verfahren zur Herstellung eines Rohlings für polarisationserhaltende Lichtleitfasern, bei dem man von einem Basisrohling ausgeht, der aus einem kreisförmigen Kern (4) aus dotiertem Siliziumoxid, einer Hülle (3) aus dotiertem Siliziumoxid und einem äußeren Rohr (2) aus Siliziumoxid besteht, wobei der Basisrohling zwei orthogonale Symmetrieebenen besitzt, die durch seine Achse verlaufen, und wobei man mechanisch an die Außenseite des Basisrohlings symmetrisch zur ersten Ebene bzw. zur zweiten Ebene zwei mindestens teilweise aus Siliziumoxid bestehende und mindestens mit Boroxid dotierte Elemente, sowie zwei längliche, mindestens teilweise aus Siliziumoxid bestehende und mindestens mit Titanoxid dotierte Elemente bringt, dadurch gekennzeichnet, daß die Außenfläche des äußeren Rohres des Basisrohlings und die vier länglichen Elemente so geformt sind, daß sie sich zu einem Ganzen fügen und ohne weiteres einen praktisch vollen Zylinder bilden, wobei die Gesamtheit der Teile an ihren beiden Enden befestigt und anschließend im Querschnitt reduziert wird.

2. Verfahren zur Herstellung eines Rohlings nach Anspruch 1, dadurch gekennzeichnet, daß die Außenfläche des äußeren Rohres (2) des Basisrohlings (1) zylindrisch ist und daß jedes längliche Element (15, 18) einen Abschnitt eines Rohres (5, 8) bildet, welches entlang zweier durch seine Achse verlaufender Ebenen zerschnitten wird.

3. Verfahren nach Anspruch 2, dadurch gekennzeichnet, daß das Rohr des länglichen Elementes ein Tragrohr (6, 9) ist, das im Inneren mit einer Schicht aus mit Boroxid (7) oder mit Titanoxid (10) dotiertem Siliziumoxid versehen wird, und daß das Rohr mit der Diamantsäge in Längsrichtung zerschnitten wird.

4. Verfahren zur Herstellung eines Rohlings nach Anspruch 1, dadurch gekennzeichnet, daß die Außenfläche des äußeren Rohres (40) des Basisrohlings (41) prismatisch ist und daß jedes längliche Element (48, 49) durch Querschnittsverminderung eines Rohres (5, 8) aus reinem Siliziumoxid erhalten wird, das mit Boroxid oder mit Titanoxid dotiert ist, wobei der aus reinem Siliziumoxid bestehende Abschnitt anschließend in Längsrichtung so bearbeitet bzw. poliert wird, daß ein Prisma (48, 49) mit polygonalem Querschnitt entsteht.

5. Verfahren zur Herstellung eines Rohlings nach Anspruch 4, dadurch gekennzeichnet, daß der Basisrohling (41) einen quadratischen Querschnitt besitzt.

6. Verfahren zur Herstellung eines Rohlings nach Anspruch 1, dadurch gekennzeichnet, daß die Außenfläche des äußeren Rohres des anfänglich zylindrischen Basisrohlings (51) so bearbeitet wird, daß vier Rillen (56, 57) gebildet werden, in die jeweils die aus zylindrischen Rohlingen (11, 12) bestehenden länglichen Elemente gelegt werden.

7. Verfahren zur Herstellung eines Rohlings nach Anspruch 6, dadurch gekennzeichnet, daß ein Rohling (11, 12) aus Boroxid oder aus Titanoxid durch Querschnittsverminderung eines Tragrohres (6, 9) mit inneren Beschichtungen (7, 10) aus Boroxid oder Titanoxid und durch anschließende totale oder partielle Beseitigung des Tragrohres erhalten wird.

8. Verfahren nach einem der vorhergehenden Ansprüche, dadurch gekennzeichnet, daß die aus dem Basisrohling und den vier länglichen Elementen bestehende Gruppe durch Einstecken in ein äußeres Rohr (14) aus Siliziumoxid eingebracht wird.

9. Verfahren nach einem der vorhergehenden Ansprüche, dadurch gekennzeichnet, daß das mit Boroxid dotierte Siliziumoxid auch Germaniumoxid enthält.

10. Verfahren nach einem der vorhergehenden Ansprüche, dadurch gekennzeichnet, daß das mit Titanoxid dotierte Siliziumoxid auch eine Fluordotierung aufweist.
